# EUROPEAN PATENT APPLICATION

(11) **EP 1 712 403 A1**
(43) Date of publication of application: **18.10.2006**
(21) Application number: 05102882.7
(22) Date of filing: 12.04.2005
(51) Int. Cl.: B60N 2/00

(54) **Method for fitting a seat sensor into a seat cushion**

(71) Applicant: IEE INTERNATIONAL ELECTRONICS & ENGINEERING S.A., 6468 Echternach (LU)
(72) Inventor: Orlewski, Pierre, 9021, ETTELBRUCK (LU); Orsello, Roberto, 1251, LUXEMBOURG (LU)
(74) Representative: Beissel, Jean

(57) **Abstract**

A method for fitting a sensor onto a seat cushion is disclosed, which is specifically suitable for the assembly of a seat sensor onto a seat cushion, wherein the seat cushion comprises a seating surface having a central region, said central region of said seating surface being at least partially delimited by a groove extending from said seating surface into said seat cushion, and wherein said sensor comprises a first sensor portion to be arranged at least partially at a periphery of said central region. The method comprises the steps of providing a mould (10) for foaming said seat cushion, said mould comprising at least one ridge (14) designed for forming said groove into said seating surface of said seat cushion; arranging said first sensor portion (18) in said mould on said at least one ridge (14), and foaming said seat cushion, thereby integrating at least part of said first sensor (18) portion into said seat cushion.

## Description

The present invention relates to a method for fitting a seat sensor to a seat cushion.
An automotive vehicle seat generally comprises a foamed seat cushion e.g. made of PU foam, which is arranged on a solid backing structure and covered by a seat trim made of a textile material or of leather. The seat cushion comprises one or more grooves, which extend from the upper seating surface of the seat cushion into the seat cushion. A seat cushion typically comprises e.g. two lengthwise extending grooves separating a central seating surface from the side bolsters and one or more transverse grooves extending between the opposite lengthwise grooves.
The grooves are typically used as crimping channels for attaching the seat trim to the seat cushion. For this purpose, a metal wire is embedded in the seat cushion so as to extend along the grooves and to be is partially exposed inside the grooves. The seat trim can then be attached to the exposed portions of the metal wire e.g. by means of hook shaped elements.
In the automotive art, it is furthermore well known to use seat sensors for detecting one or more parameters relating to a seating condition with respect to the vehicle seats. The determined parameters are then used in the control of secondary restraint systems, driver warning systems and/or comfort systems. Specific examples of such seat sensors comprise passenger detection sensors, child seat presence and orientation detection sensors, occupant classification sensors, seat belt warning sensors, etc.
The passenger presence detectors, the occupant classification sensors and the seat belt reminder sensors are usually configured as thin foil-type sensors comprising e.g. a plurality of pressure sensors interconnected by flexible strips, which are to be associated to a seating surface of the vehicle seat. Other sensors, such as e.g. the child seat presence and orientation detection sensors comprise two or more antenna structures arranged on a thin flexible carrier material. All these sensors are generally configured to be associated to the seating surface of the vehicle seat, normally between the seat cushion and the seat trim.
Depending on the sensor type, the flexible sensor structures have to cover a large area of the seating surface. This means on the other hand, that if a sensor is placed on top of the seat cushion, the sensor or the flexible strips of the sensor respectively have to cross the grooves of the seat cushion at different locations. The crossing of the sensor strips is typically achieved by providing sensor channels extending transversely to the grooves from the upper seating surface to the bottom of the grooves. During assembly of the sensor and the seat cushion, the sensor strips are inserted into these sensor channels so as to cross the grooves at their bottom.
This technique is suitable for seat cushions with shallow grooves and/or seat and sensor configurations which lead to a small number of crossing points between sensor strips and crimp channels. If however the seat cushion comprises a high number of transverse crimp channels, which in addition are very deep, this classical assembly method is rendered virtually impossible.

### Object of the invention

The object of the present invention is accordingly to provide a different method for assembling a seat sensor on a seat cushion.

### General description of the invention

This object is achieved by a method for fitting a sensor onto a seat cushion according to claim 1. This method is specifically suitable for the assembly of a seat sensor onto a seat cushion, wherein the seat cushion comprises a seating surface having a central region, said central region of said seating surface being at least partially delimited by a groove extending from said seating surface into said seat cushion, and wherein said sensor comprises a first sensor portion to be arranged at least partially at a periphery of said central region.

In order to overcome the abovementioned problems, the method of the present invention comprises the steps of
providing a mould for foaming said seat cushion, said mould comprising at least one ridge designed for forming said groove into said seating surface of said seat cushion;
arranging said first sensor portion in said mould on said at least one ridge, and
foaming said seat cushion, thereby integrating at least part of said first sensor portion into said seat cushion.
According to the present invention, the sensor or the first sensor portion is at least partially foamed into the seat cushion instead of placing the sensor onto the seating surface. The sensor is integrated at a depth, which substantially corresponds to the depth of the grooves, such that crossings between the sensor strips and the grooves are no longer critical. The method according to the present invention eliminates the need for complicated sensor assembly and is thus specifically suitable for seats having a high number of grooves and/or for seats where the grooves are very deep.
Furthermore, the seat assembly is radically shortened, as the sensor is already integrated after the foaming process. This is especially important in today's just in time delivery conditions. Finally, the integration of the sensor into the seat cushion foam ensures a reliable positioning of the sensor during the vehicle lifetime, so that detection accuracy is preserved over lifetime.
It will be noted, that the sensor comprises a connection strip, which enables connection of the sensor to an external evaluation unit. During the arrangement of the sensor into the mould, this connection strip is lead out of the mould and arranged so that the extremity carrying the connection terminals extends outside of the mould. It follows that after the foaming of the seat cushion, the connection terminals are accessible outside of the cushion for later connection of the sensor to the evaluation unit.
The first sensor portion comprises e.g. an antenna arrangement of a child seat presence and orientation detection (CPOD) system. Such a CPOD system is e.g. disclosed in EP-A-0 708 002. The antenna arrangement comprises e.g. one single receiving antenna loop, which has to be associated to the seating surface so as to substantially surround the central portion of the seating surface. The antenna arrangement further comprises two emitting antenna loops, each of which should surround one half of the central portion.
According to the present invention, the antenna loops are foamed into the seat cushion at a depth, which corresponds substantially to the depth of the crimp channels. It follows that the distance between the lengthwise extending grooves no longer limits the dimensions (e.g. the width) of the antenna loops. In fact, as the crossing between the antenna loops and the grooves is not critical, the antenna loops may be dimensioned so as to extend beyond the grooves, thus increasing the total area of the antenna loops. This increase of the antenna loop area compensates the decreased detection height of the sensor due to its arrangement at a certain depth below the seating surface.
In a preferred embodiment of the invention, said step of arranging said first sensor portion in said mould comprises the steps of attaching auxiliary inserts onto said ridge and fastening said first sensor portion onto said auxiliary inserts. The auxiliary inserts may be placed onto the ridges of the mould and after their correct positioning in the seat the sensor may be attached to the auxiliary inserts. Alternatively, the auxiliary inserts may be fastened to the first sensor portion prior to their arrangement into the mould and only subsequently attached at their respective positions on the mould ridges.
It will be appreciated that the auxiliary inserts should be designed so as to be easily removable from the ridges after the foaming process. In fact, during the foaming, the auxiliary inserts are foamed together with the first sensor portion into the seat cushion and thus remain a part of the seat cushion. It follows, that the auxiliary inserts are removed from the mould together with the seat cushion and should accordingly be easily separable from the ridges.
In a possible embodiment, the auxiliary inserts comprise a base portion and a clip portion extending from said base portion, said clip portion for removably clipping said auxiliary insert onto an upper edge of said ridge. Such a clipable insert is easily attached to the ridges and thus ensures a reliable positioning of the inserts with respect to the ridges during foaming. It should be noted that after the foaming process, the clip portion extends from the bottom of the groove along the lateral walls of the groove. The first sensor portion is preferably attached to the base portion of the auxiliary insert. The sensor strips may be fastened by any suitable means such as e.g. clips, hook and loop fasteners, rivets or the like or by an adhesive.
It will be appreciated, that the sensor strips may be provided with specific fastening lugs for fastening the sensor to the auxiliary inserts. These fastening lugs may be positioned asymmetrically on the sensor so as to ensure a correct positioning of the sensor and to avoid the sensor being arranged upside down.
The auxiliary insert may be a designated part, which is only used to temporarily attach the first sensor portion onto the ridges of the mould. In a different embodiment, the auxiliary inserts may serve other purposes e.g. to arrange other elements into the mould prior to the foaming step. The auxiliary inserts may e.g. comprise trim hooks, which are integrated into the seat cushion foam for later attachment of the seat trim. Alternatively said auxiliary inserts are adapted to position a metal wire into said mould, said metal wire extending along said ridge for being at least partially foamed into said cushion. The metal wire partially foamed into the cushion can then serve for attaching a seat upholstery or seat trim after the foaming of the cushion.
Depending on the application, the seat sensor may comprise a second sensor portion to be arranged on top of said seating surface of said seat cushion. This is e.g. the case for seat belt reminder seat sensors, which are arranged in the rear area of the seating surface for detecting the presence of a passenger on the seat. The seat belt reminder sensor comprises several pressure sensitive cells, which should be arranged between the seat cushion and the seat trim. In this case, the method may comprise the further step of inserting said second sensor portion into a secondary cavity within said mould.
The secondary cavity is e.g. arranged in the mould portion forming the upper seating surface of the seat cushion, e.g. the bottom of the mould, as the foam cushions are traditionally foamed upside down. After insertion of the second sensor portion, the secondary cavity is preferably closed (towards the main mould cavity) by means of a cover, so that during the foaming process, a penetration of the foam material into the secondary cavity is prevented. After the foaming process, the second sensor portion is removed from the cavity and remains freely accessible above the seating surface.
The second sensor portion also comprises a connection strip enabling the second sensor portion to be connected to an evaluation unit. The arrangement of the second sensor in the mould is preferably such that the connection strip of the second sensor portion extends from the secondary cavity through the main mould cavity to the location, at which the connection strip of the first sensor portion is lead out of the mould. Both connection strips are accordingly lead out of the mould at the same location, thus enabling the connection of the different sensor portions at the same location. In a preferred embodiment of the sensor, said first sensor portion and said second sensor portion are furthermore connected to a common connection terminal by means of their flexible connection strips, thus enabling connection of the different sensor elements by means of a single connector. The common terminal also ensures a correct positioning of the second seat portion once the first sensor portion is correctly positioned, thus preventing the second sensor portion being arranged upside down.
It will be noted, that the connection strip of the second sensor portion is foamed into the seat cushion, thus ensuring a reliable positioning of the second sensor portion with respect to the seating surface of the seat cushion. The second sensor portion is finally attached to the seating surface by the trim material. It will be noted, that this embodiment of the present method enables a reliable positioning of the second sensor portion by foaming, without subjecting the second sensor portion itself to the foaming process conditions, e.g. as high temperature or the like. In fact, during the foaming process the second sensor portion is shielded from the foam by means of the secondary cavity cover, so that no alteration of the sensor characteristic by temperature may occur. It remains to be noted, that the second sensor portion may further be protected by insertion into a felt pocket or the like prior to its insertion into the secondary cavity.

### Detailed description with respect to the figures

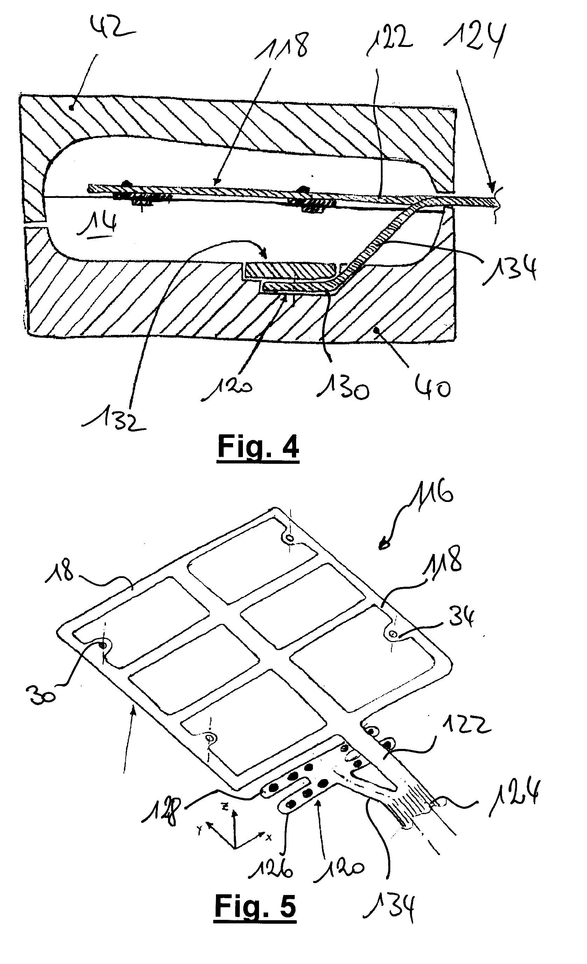

The present invention will be more apparent from the following description of several not limiting embodiments with reference to the attached drawings, wherein
- Fig.1:: shows a schematic representation of an interior of a mould portion for foaming a cushion seat,
- Fig.2:: an elevation view of an auxiliary insert for attaching the sensor onto the mould ridges;
- Fig.3:: a section view of the sensor being fastened to the auxiliary insert;
- Fig.4:: a section view of the mould after the insertion of the first and second sensor portion;
- Fig.5:: a view of a combined sensor.

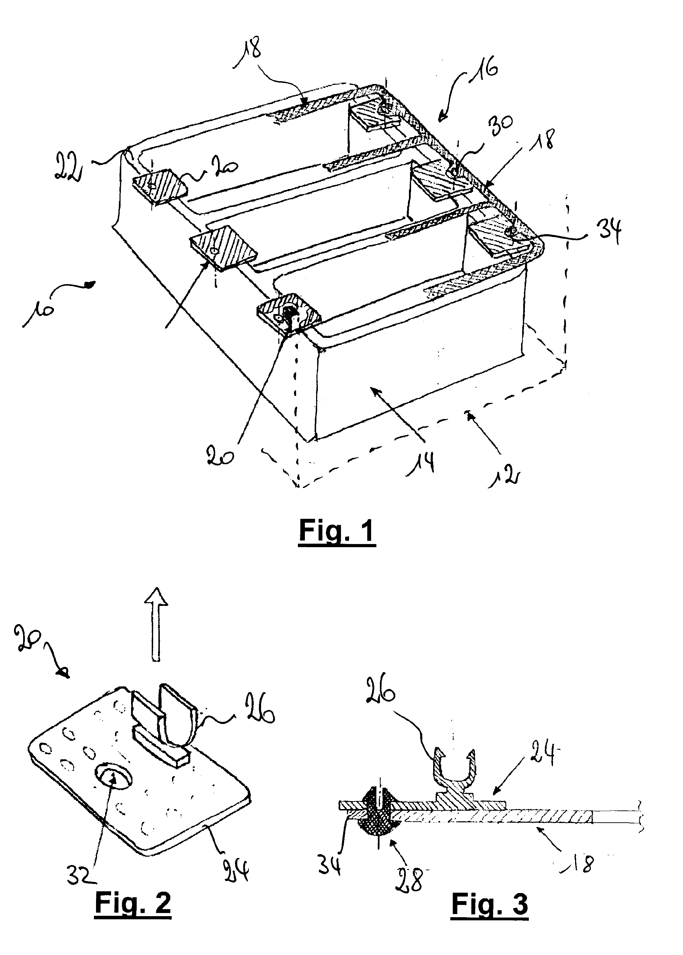

Fig. 1 shows a part of a mould interior 10 for foaming a seat cushion. Fig. 1 only shows the inner parts of the mould, the outline of the mould being indicated by the dashed line 12. The shown mould portion 10 comprises several shaping ribs or ridges 14, which extend upwardly from the mould bottom for forming grooves into the foamed cushion. The ridges 14 are arranged in a specific arrangement, which is given by the design of the seat cushion and the requirements for attaching a seat trim to the cushion. In the shown embodiment, the ridges are arranged so as to form two lengthwise extending grooves and 4 transverse grooves extending between the two lengthwise grooves.
According to the present invention, a (partially shown) seat sensor 16 comprising several flexible sensor strips 18 has to be associated to the seat cushion. This is achieved by arranging the seat sensor in the mould prior to the foaming of the seat cushion. The sensor is preferably arranged on the ridges 14, so that after foaming, the sensor is at least partially integrated into the seat foam.
The correct arrangement and the positioning of the sensor 16 is achieved by means of auxiliary inserts 20, which are clipped onto the upper edges 22 of the ridges 14. The auxiliary inserts may comprise a base portion 24 and a clip portion 26 extending from said base portion 24, said clip portion being adapted to be clipped onto the ridges 14 (see fig. 2). The auxiliary inserts may be specifically designed for the only purpose of fastening the sensor 16 to the ridges. Preferably however, the auxiliary inserts also serve for attaching the seat trim after the foaming process and/or for positioning an attachment wire inside the mould as described above.
The sensor 16 is preferably fastened to the lower surface of the auxiliary insert (see fig. 3), i.e. to the surface opposite of the clip means, which during the upside down foaming process, is directed upwardly. The sensor may be fastened by any suitable means such as clips, hook and loop fasteners, rivets or the like or by an adhesive. In the shown embodiment, the sensor is attached by resilient pegs 28, which extend through respective fixation openings 30 and 32 of the sensor and the base plate of the auxiliary inserts 20. As can be seen in fig. 1 and 5, the fixation openings 30 of the sensor are preferably arranged in fastening lugs 34, which extend laterally from the sensor strips 18. These fastening lugs 34 may be positioned asymmetrically on the sensor 16 so as to ensure a correct positioning of the sensor and to avoid the sensor e.g. being arranged upside down.
Fig. 4 shows a cross-section of a mould 40, 42 after closing and prior to the injection of the foam material. A two-part sensor 116 having a first sensor portion 118 and a second sensor portion 120 is arranged in the mould. The first sensor portion 118 is positioned inside the mould 42 as described above.
The first sensor portion comprises several flexible sensor strips 118 and a connection strip 122 connecting the first sensor portion 118 to a connection terminal 124. During arrangement of the first sensor portion 118 in the mould, the connection strip 122 is arranged so as to lead out of the mould e.g. on the rear side of the seat cushion. It follows that the connection terminal 124 is arranged outside the mould and is accordingly accessible after the foaming process for connection of the sensor to a non shown evaluation unit.
The second sensor portion 120, e.g. a seat belt reminder sensor which has to be arranged on the seating surface of the cushion, is also arranged inside the mould 40, 42. The second sensor portion 120 comprises e.g. a plurality of pressure sensitive cells 126 arranged on flexible sensor strips 128. In order to ensure that second sensor portion 120 is correctly positioned on the upper seating surface, the second sensor portion 120 is inserted into a secondary cavity 130, which is arranged in the bottom of mould portion 40. After the insertion of the second sensor portion 120, the secondary cavity 130 may be closed towards the main mould cavity by means of a cavity cover 132, so that during the foaming process, no foam material enters the cavity 130.
The second sensor portion 120 also comprises a connection strip 134 connecting the second sensor portion 120 to the connection terminal 124. As shown in fig. 4, the arrangement of the second sensor portion 120 in the mould is preferably such that the connection strip 134 of the second sensor portion 120 extends from the secondary cavity 130 through the main mould cavity to the location, at which the connection strip 122 of the first sensor portion 118 is lead out of the mould. It will be noted, that the connection strip 134 will be specifically dimensioned so as to allow the arrangement of the second sensor portion 120 in a plane, which is distant from the first sensor portion plane.

## Claims

1. Method for fitting a sensor onto a seat cushion, wherein said seat cushion comprises a seating surface having a central region, said central region of said seating surface being at least partially delimited by a groove extending from said seating surface into said seat cushion, and wherein said sensor comprises a first sensor portion to be arranged at least partially at a periphery of said central region, the method comprising the steps of
providing a mould for foaming said seat cushion, said mould comprising at least one ridge designed for forming said groove into said seating surface of said seat cushion;
arranging said first sensor portion in said mould on said at least one ridge, and
foaming said seat cushion, thereby integrating at least part of said first sensor portion into said seat cushion.

2. Method according to claim 1, wherein said step of arranging said first sensor portion in said mould comprises the steps of attaching auxiliary inserts onto said ridge and fastening said first sensor portion onto said auxiliary inserts.

3. Method according to any one of claims 1 or 2, wherein said auxiliary inserts comprise a base portion and a clip portion extending from said base portion, said clip portion for clipping said auxiliary insert onto an upper edge of said ridge.

4. Method according to claim 3, wherein said clip portion of said auxiliary insert is adapted for attaching a seat trim.

5. Method according to any one of claims 1 to 4, wherein said auxiliary inserts are adapted to position a metal wire into said mould, said metal wire extending along said ridge for being at least partially foamed into said cushion.

6. Method according to any one of claims 1 to 5, wherein said sensor further comprises a second sensor portion to be arranged on top of said seating surface of said seat cushion, said method comprising the further step of inserting said second sensor portion into a cavity within said mould.

7. Method according to claim 6, wherein said first sensor portion and said second sensor portion are connected to a common connection terminal by means of flexible connection strips.
